# DEMANDE DE BREVET EUROPEEN

(11) **EP 0 708 277 A1**
(43) Date de publication de la demande: **24.04.1996**
(21) Numéro de dépôt: 95402321.4
(22) Date de dépôt: 18.10.1995
(51) Int. Cl.: F16H 63/20, F16H 61/18

(54) **Dispositif et procédé de commande de boîte de vitesses**

(30) Priorité: 18.10.1994 FR 9412395
(71) Demandeur: Société Anonyme dite: REGIE NATIONALE DES USINES RENAULT, F-92109 Boulogne Billancourt (FR)
(72) Inventeur: Prenel, Jean-Marc, F-78730 Saint-Arnoult-en-Yvelines (FR); Raoul, Michel, F-78990 Elancourt (FR); Fievet, Serge, F-78360 Montesson-la-Borde (FR)

(57) **Abrégé**

Dispositif de commande boîte de vitesses comportant un axe de commande interne (5) déplacé en translation lors de la sélection d'une ligne de passage des vitesses et en translation lors du passage d'une vitesse sur la ligne de passage sélectionnée, sous le contrôle du levier de changement de vitesses du véhicule, au moins un doigt de sélection de marche avant (7) et un doigt de sélection de marche arrière (7, 8) solidaires de l'axe de commande interne (5), au moins un crabot de marche avant (15, 16, 17) coopérant avec le doigt de sélection de marche avant (7) et un crabot de marche arrière (18) coopérant avec le doigt de sélection de marche arrière (7, 8), caractérisé en ce que crabot de marche arrière (18) est décalé par rapport au crabot de marche avant (15, 16, 17) en position de point mort de sorte que lors du passage du rapport de marche avant le plus élevé, le doigt de sélection de marche arrière (7, 8) vient en appui contre une face (18c) du crabot de marche arrière (18) sans pouvoir s'engager entre les dents (18a, 18b) de celui-ci.

## Description

La présente invention se rapporte à la commande interne des boîtes de vitesses mécaniques. Elle concerne une boîte de vitesses du type comportant un axe de commande interne déplacé en translation lors de la sélection d'une ligne de passage des vitesses et en translation lors de l'engagement d'une vitesse sur la ligne de passage sélectionnée, sous le contrôle du levier de changement de vitesses du véhicule, au moins un doigt de sélection de marche avant et un doigt de sélection de marche arrière solidaires de l'axe de commande interne, au moins un crabot de marche avant coopérant avec le doigt de sélection de marche avant, et un crabot de marche arrière coopérant avec le doigt de sélection de marche arrière.

L'engagement des pignons de vitesses avec l'arbre secondaire d'une boîte de vitesses, en réponse aux mouvements de l'axe de commande interne de celle-ci, s'effectue habituellement au moyen d'au moins un doigt de sélection solidaire de cet axe. Lors de la sélection d'une ligne de passage de vitesses, le doigt de sélection s'engage dans un crabot, tandis que pour passer un rapport sur la ligne de passage sélectionnée, ce crabot déplace par l'intermédiaire d'un axe de fourchette et d'une fourchette, un baladeur permettant la synchronisation d'un pignon de vitesse avec l'arbre secondaire.

Les déplacements de l'axe de commande interne sont commandés par l'utilisateur à partir de son levier de changement de vitesses, par l'intermédiaire d'un mécanisme de commande externe selon une grille de commande, déterminée notamment par l'agencement du doigt de sélection et des crabots à l'intérieur de la boîte.

Les grilles de commande de vitesses des véhicules actuels placent la marche arrière sur une ligne de passage de vitesses spécifique ou sur la même ligne que la cinquième.

La première solution nécessite l'intégration dans le mécanisme de commande de la boîte, d'une butée interdisant le passage de la marche arrière à partir de la ligne de passage voisine, telle que la ligne de passage 1-2. Cette butée doit cependant être escamotable pour permettre l'engagement de la marche arrière lorsque cet engagement est souhaité. Il est donc nécessaire d'ajouter à la commande un système de désinterdiction, par exemple une gâchette de déverrouillage sur le levier de changement de vitesses. Outre leur coût élevé, de tels systèmes de désinterdiction additionnels ont pour inconvénient de nécessiter des réglages délicats.

La seconde solution, consistant à placer la marche arrière en face de la cinquième, nécessite également l'intégration de moyens interdisant le passage direct de cinquième en marche arrière, en déviant le doigt de sélection en direction de la ligne 3-4 lors du rétrogradage à partir de la cinquième.

Par la publication FR 2 686 385 au nom de la demanderesse, on connaît notamment un dispositif de commande de vitesses assurant la sélection et l'engagement de cinq vitesses de marche avant et d'une marche arrière placée en face de la cinquième. Ce dispositif inclut un doigt de guidage, solidaire du doigt de sélection. Le doigt de guidage, engagé dans une grille de commande interne, rencontre un loqueteau situé en regard de celle-ci, de façon à interdire le passage de cinquième en marche arrière.

Le système d'interdiction décrit dans la publication FR 2 686 385 nécessite l'intégration dans la boîte de vitesses de nombreuses pièces spécifiques d'un coût élevé.

On connaît par ailleurs des systèmes de commande de boîte de vitesses utilisant des crabots à dents d'épaisseur inégale, notamment pour le rapport le plus élevé de marche avant et pour la marche arrière. Ces systèmes conduisent à des grilles de sélection et de passage de vitesses particulières, illustrées notamment par la publication EP-0.139.261, selon laquelle la ligne de passage de la marche arrière est presque en face de celle du rapport le plus élevé de marche avant, sans pour autant être alignée avec celle-ci. Conformément aux autres systèmes évoqués ci-dessus, le système proposé par la publication EP-0.039.261 comporte cependant un dispositif de verrouillage spécifique, pour empêcher l'engagement involontaire de la marche arrière à partir du rapport le plus élevé de marche avant.

La présente invention vise à réaliser un dispositif de commande de boîte de vitesses mécanique compact, assurant de manière particulièrement simple, l'interdiction des passages involontaires en marche arrière.

Elle propose un dispositif de commande de boîte de vitesses comportant un axe de commande interne déplacé en translation lors de la sélection d'une ligne passage de vitesses et en translation lors de du passage d'une vitesse sur la ligne de passage sélectionnée, sous le contrôle du levier de changement de vitesses du véhicule, au moins un doigt de sélection de marche avant et un doigt de sélection de marche arrière solidaires de l'axe de commande interne, au moins un crabot de marche avant coopérant avec le doigt de sélection de marche avant et un crabot de marche arrière coopérant avec le doigt de sélection de marche arrière. Ce dispositif est caractérisé en ce que le crabot de marche arrière est décalé par rapport au crabot de marche avant en position de point mort de sorte que lors du passage du rapport de marche avant le plus élevé, le doigt de sélection de marche arrière vient en appui contre une face du crabot de marche arrière sans pouvoir s'engager entre les dents de celui-ci.

Pour que la marche arrière ne puisse pas être passée de manière involontaire, l'invention prévoit en outre que le crabot de marche avant correspondant au rapport le plus élevé doit être placé dans l'alignement du crabot de marche arrière pour autoriser l'engagement du doigt de sélection de marche arrière à l'intérieur de celui-ci.

De préférence, le crabot de marche avant correspondant au rapport le plus élevé est rappelé dans l'alignement des autres crabots de marche avant, après que le doigt de sélection de marche arrière ait atteint la ligne d'engagement de marche arrière.

Ces dispositions correspondent à une grille de sélection et d'engagement des vitesses spécifique, selon laquelle la ligne de sélection de la marche arrière est décalée vis-à-vis de celle dès rapports de marche avant, sur la grille de commande du levier de changement de vitesses.

L'invention a également pour objet un procédé de commande d'une boîte de vitesses. Ce procédé est caractérisé en ce que pour passer la marche arrière :
- on sélectionne la ligne de passage du rapport de passage de marche avant le plus élevé,
- on repousse le levier de changement de vitesses dans la direction opposée à ce rapport et,
- on rejoint la ligne de passage de la marche arrière sur une ligne de sélection décalée par rapport à celle des rapports de marche avant.

D'autres caractéristiques et avantages de l'invention apparaîtront clairement à la lecture de la description suivante d'un mode de réalisation particulier de celle-ci, en liaison avec les dessins annexés sur lesquels :
- la figure 1 représente partiellement un dispositif de commande interne de boîte de vitesses conforme à l'invention,
- la figure 2 représente un crabot de marche arrière ou de marche avant du dispositif proposé,
- la figure 3 illustre le passage de la marche arrière avec un double doigt de sélection,
- la figure 4 illustre le passage du rapport de marche avant le plus élevé avec le même double doigt que la figure 3,
- la figure 5 illustre le passage de la marche arrière avec un doigt simple,
- la figure 6 illustre le passage du rapport le plus élevé de marche avant avec le même simple doigt que la figure 5, et
- la figure 7 représente la grille de sélection et de passage des vitesses proposée par l'invention.

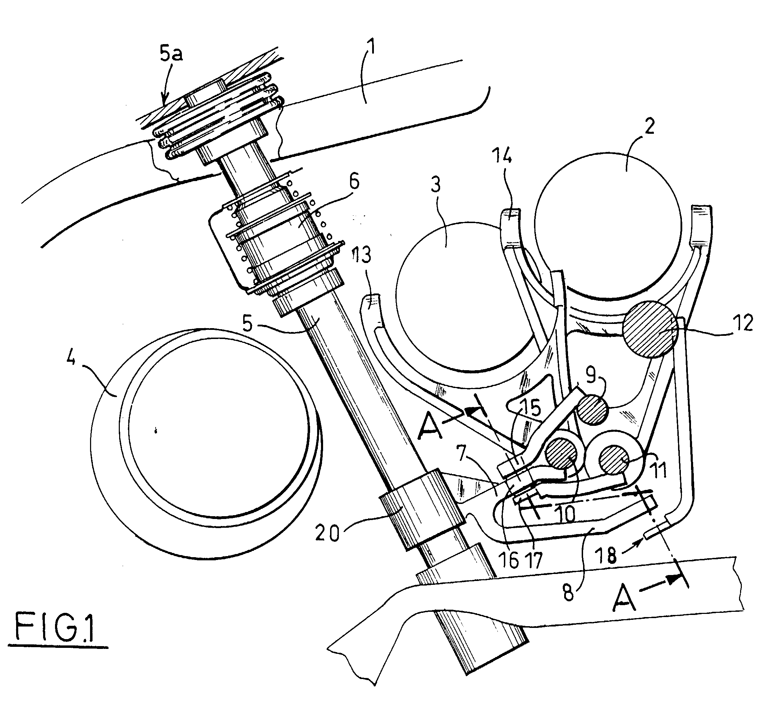

Sur la figure 1, on a représenté à l'intérieur du carter 1 d'une boîte de vitesses mécanique, l'emplacement de l'axe primaire 2 de l'axe secondaire 3 et du différentiel 4 de celle-ci. Le mécanisme de commande interne de la boîte comporte un axe de commande interne 5, supportant de façon classique un système de rappel 6 sur la ligne de vitesses 3-4. L'axe 5 est relié par son extrémité supérieure 5a à un dispositif de commande externe non représenté, actionné par le levier de changement de vitesses du véhicule. Il porte également un doigt de sélection de marche avant 7 et de marche arrière 8 fixés sur un support commun 20. La figure montre également l'emplacement des axes de fourchette de première et de seconde 9, de troisième et de quatrième 10, de cinquième 11, et de marche arrière 12. Pour ne pas surcharger le schéma, seules les fourchettes de troisième et de quatrième 13, et la fourchette de cinquième 14 ont été représentés. Le mécanisme de commande représenté comporte quatre crabots de commande des vitesses 15, 16, 17, 18, fixés respectivement sur les axes de fourchette 9, 10, 11 et 12. Sur ce schéma, le dispositif de commande est placé sur la ligne 3-4 puisque le doigt de sélection de marche avant 7 est placé en face du crabot correspondant 16, tandis que le doigt de sélection de marche arrière 8 est à l'écart du crabot correspondant 18. Enfin, la figure 1 met en évidence que le crabot de cinquième 17 et le crabot de marche arrière 18 présentent, en coupe, une épaisseur réduite environ de moitié par rapport aux autres crabots.

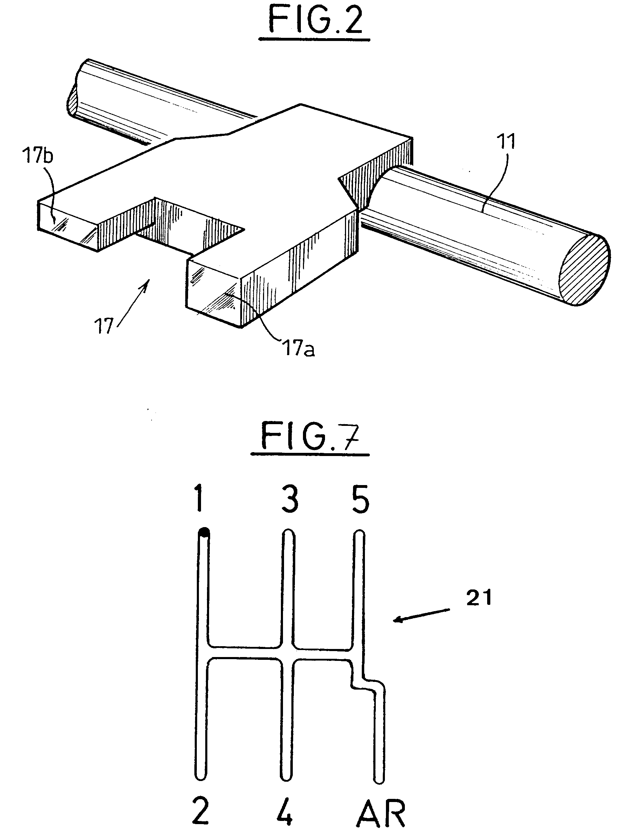

La figure 2 représente un crabot de boîte de vitesses 17, fixé par sa partie arrière sur un axe de commande de fourchette 11, tel que l'axe de fourchette de cinquième de la figure 1. Ce crabot 17 présente deux dents 17a, 17b d'épaisseur inégale, l'une étant sensiblement le double de celle de l'autre.

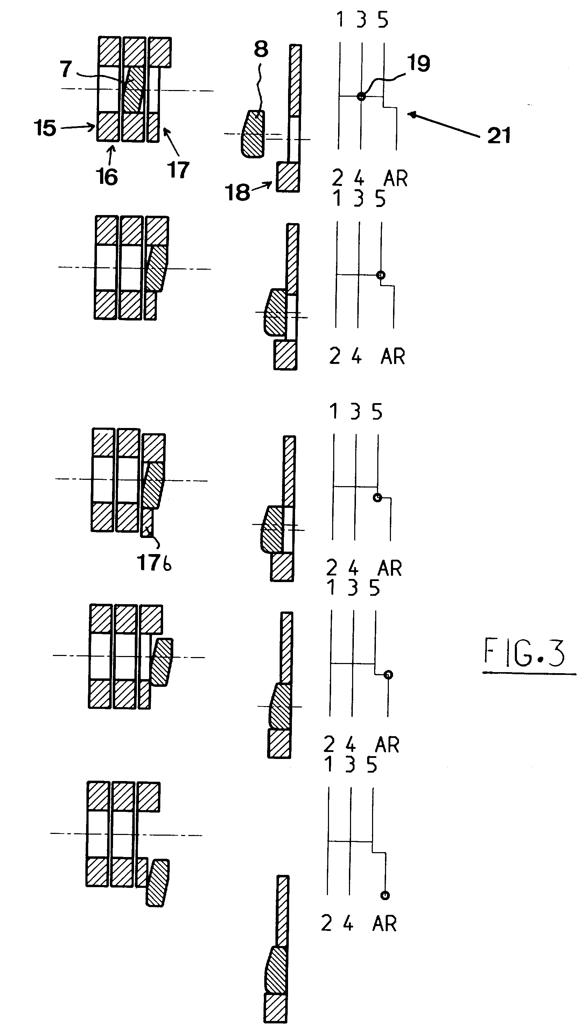

Comme l'indiquent les figures 3 à 6, cette disposition est adoptée sur le crabot de marche avant correspondant au rapport le plus élevé, à savoir le crabot de cinquième 17, et sur le crabot de marche arrière 18. Ces figures présentent des coupes brisées passant par les quatre crabots 15, 16, 17, 18 de la boîte, à chaque étape du passage en marche arrière et du passage sur le rapport de marche avant le plus élevé. Les coupes sont accompagnées de schémas montrant la position correspondante du levier de changement de vitesses 19 sur la grille de sélection et de changement de rapports 21 proposée par l'invention.

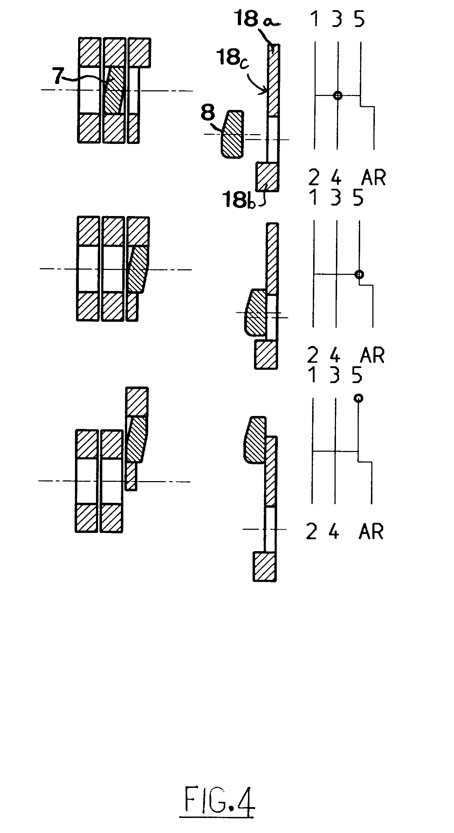

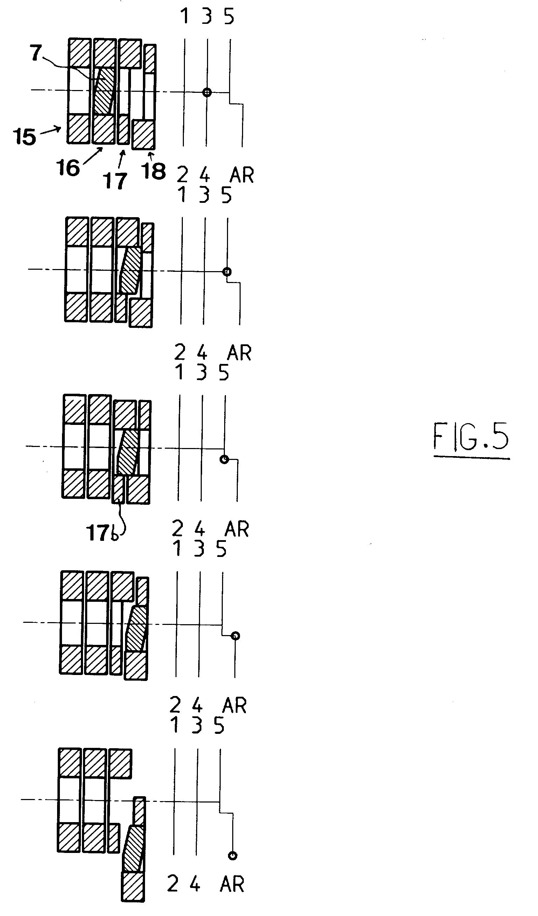

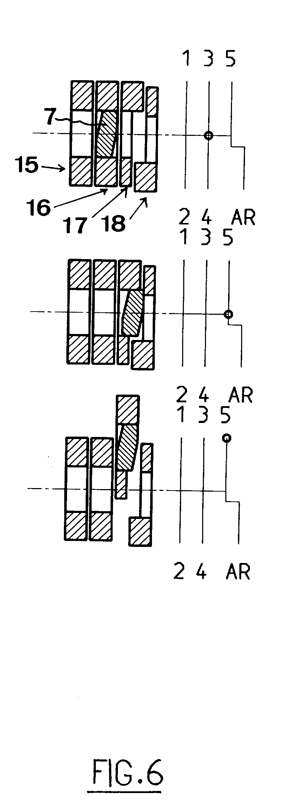

Les figures 3 et 4 se rapportent à un premier mode de réalisation de l'invention, conforme à la figure 1, selon lequel le dispositif de commande de la boîte de vitesses présente un doigt de sélection distinct 7 et 8 pour la marche avant et la marche arrière, tandis que les figures 5 et 6 se rapportent à un second mode de réalisation, selon lequel le dispositif de commande présente un doigt de sélection unique pour l'ensemble des rapports disponibles. Sur l'ensemble des figures 3 à 6, on voit que le crabot de cinquième 17 et le crabot de marche arrière présentent, conformément à la figure 2, deux dents inégales 17a, 17b, et 18a, 18b soit une première dent 17a, 18a d'épaisseur normale, et une seconde dent 17b, 18b d'épaisseur réduite.

Le premier schéma de chacune des figures 3 à 6, correspondant au point mort, fait apparaître que dans cette situation, le doigt de sélection de marche avant 7 est engagé dans le crabot de troisième et de quatrième 16, tandis que le doigt de sélection de marche arrière 7, 8 (distinct du doit de marche avant 7 sur les figures 5 et 6) est distant du crabot de marche arrière 18.

Conformément aux schémas, au point mort, le crabot de marche arrière 18 est décalé par rapport aux crabots de marche avant (15, 16, 17), de sorte que, lors de l'engagement du rapport de marche avant le plus élevé (cf figures 4 et 6) le doigt de sélection de marche arrière 7, 8 vient en appui contre une face 18c du crabot de marche arrière 18, sans pouvoir s'engager entre les dents 18a, 18b de celui-ci.

Pour engager la marche arrière (figures 3 et 5), l'utilisateur commence par sélectionner la ligne du rapport de marche avant le plus élevé (cf figures 3 et 5, second schéma). Le doigt de sélection de marche arrière vient alors en butée sur la face interne 18c du crabot de marche arrière 18. Le dispositif autorise alors un déplacement du crabot de rapport de marche avant le plus élevé 17, dans l'alignement du crabot de marche arrière 18 (cf figures 3 et 5, troisième schéma). Ce déplacement est nécessaire pour autoriser l'engagement du doigt de sélection de marche arrière 7, 8 à l'intérieur du crabot de marche arrière 18. Après que le doigt de sélection de marche arrière 7, 8 ait atteint la ligne de passage de la marche arrière (cf figures 3 et 5, quatrième schéma), le crabot de marche avant le plus élevé 17 est rappelé dans l'alignement des autres crabots de marche avant 15, 16, de préférence par le système de billage de la boîte (non représenté). De plus, l'engagement effectif du doigt de sélection de marche arrière 7, 8, sur la ligne de passage de marche arrière est interdit lors du retour du crabot de marche avant 17 dans l'alignement des autres crabots de marche avant 15, 16. Enfin, le montage des crabots est tel, que la course de retour du crabot de marche avant 17 ne dépasse pas en longueur son déplacement aller.

Le système de rappel 6 en ligne 3-4 mentionné sur la figure 1 sollicite le doigt de sélection de marche avant 7 vers le point mort, sans que ce doigt ne déplace le crabot de marche avant 17, de sorte qu'on ne peut pas passer par inadvertance la cinquième, lors du dégagement de la marche arrière.

Sur les figures 4 et 6, on voit que le passage de la cinquième ou, d'une façon plus générale, le passage du rapport de marche avant le plus élevé, peut s'effectuer de la façon suivante :
- sélection du crabot du rapport de marche avant le plus élevé 17,
- mise en butée du doigt de sélection de marche arrière 8 contre la face interne 18c (de la seconde dent 18b) du crabot de marche arrière 18 et,
- déplacement du crabot de marche avant sélectionné 17, par le doigt de sélection de marche avant 7, sans déplacement du crabot de marche arrière 18.

Lors du dégagement du rapport de marche avant le plus élevé, le doigt de sélection de marche arrière sera donc appelé en position de point mort (ligne 3-4) sans déplacer le crabot de marche arrière, 7, 8.

Les figures 5 et 6 correspondent respectivement aux figures 3 et 4, à ceci près que le dispositif de commande ne comporte qu'un seul doigt de sélection 7 pour sélectionner les crabots de marche avant 15, 16, 17 et le crabot de marche arrière 18, et que le crabot de marche arrière 18 est jointif aux autres crabots 15, 16, 17.

La grille de sélection et d'engagement de vitesses proposée par l'invention apparaissant sur les schémas des figures 3 à 6 fait par ailleurs l'objet de la figure 7 où elle est reproduite telle qu'elle peut être présentée à l'utilisateur sur son levier de changement de vitesses, pour attirer son attention sur le décalage entre la ligne de sélection des rapports de marche avant et la ligne de sélection de la marche arrière. Conformément à l'invention, le passage de la marche arrière s'effectue en effet en sélectionnant la ligne de passage du rapport de marche avant le plus élevé avant de repousser le levier de changement de vitesses sur cette ligne dans la direction opposée à ce rapport et de rejoindre la ligne de passage de la marche arrière sur une ligne de sélection de marche arrière décalée par rapport à celle des rapports de marche avant.

En conclusion, l'invention permet d'obtenir une grille de sélection et de passage de vitesses, selon laquelle la marche arrière est obtenue sur une ligne de sélection légèrement décalée vers le bas par rapport celle des rapports de marche avant et sur une ligne de passage légèrement décalée latéralement par rapport à celle du rapport de marche avant le plus élevé. Le dispositif de commande permettant d'obtenir cette grille ne nécessite ni d'élément d'interdiction additionnel, ni de réglage particulier, pour empêcher le passage direct de cinquième en marche arrière. L'invention s'applique aussi bien sur une boîte de vitesses présentant un doigt de sélection distinct pour la marche avant et pour la marche arrière, que sur une boîte de vitesses présentant un doigt de sélection unique.

## Revendications

1. Dispositif de commande boîte de vitesses comportant un axe de commande interne (5) déplacé en translation lors de la sélection d'une ligne de passage des vitesses et en translation lors du passage d'une vitesse sur la ligne de passage sélectionnée, sous le contrôle du levier de changement de vitesses du véhicule, au moins un doigt de sélection de marche avant (7) et un doigt de sélection de marche arrière (7, 8) solidaires de l'axe de commande interne (5), au moins un crabot de marche avant (15, 16, 17) coopérant avec le doigt de sélection de marche avant (7) et un crabot de marche arrière (18) coopérant avec le doigt de sélection de marche arrière (7, 8), caractérisé en ce que le crabot de marche arrière (18) est décalé par rapport au crabot de marche avant (15, 16, 17) en position de point mort de sorte que lors du passage de du rapport de marche avant le plus élevé, le doigt de sélection de marche arrière (7, 8) vient en appui contre une face (18c) du crabot de marche arrière (18) sans pouvoir s'engager entre les dents (18a, 18b) de celui-ci.

2. Dispositif de commande selon la revendication 1, caractérisé en ce que le crabot de marche avant correspondant au rapport le plus élevé (17) doit être placé dans l'alignement du crabot de marche arrière (18) pour autoriser l'engagement du doigt de sélection de marche arrière (7, 8) à l'intérieur de celui-ci.

3. Dispositif de commande selon la revendication 2, caractérisé en ce que le crabot de marche avant correspondant au rapport le plus élevé (17) est rappelé dans l'alignement des autres crabots de marche avant (15,16) après que le doigt de sélection de marche arrière (7, 8) ait atteint la ligne d'engagement de marche arrière.

4. Dispositif de commande selon la revendication 3, caractérisé en ce que l'engagement du doigt de sélection de marche arrière (7,8) sur la ligne de passage de la marche arrière est interdit lors du retour du crabot de marche avant correspondant au rapport le plus élevé (17) dans l'alignement des autres crabots de marche avant (15,16), par un doigt (17b) dudit crabot de marche avant.

5. Dispositif de commande selon la revendication 4, caractérisé en ce que la course de retour en question ne dépasse pas en longueur le déplacement autorisant l'engagement du doigt de sélection de marche arrière (7, 8) dans le crabot de marche arrière (18), à partir du point mort.

6. Dispositif de commande selon l'une des revendications précédentes, caractérisé en ce que la sélection des crabots de marche avant (15, 16, 17) et du crabot de marche arrière (18) est assurée par le même doigt de sélection (7).

7. Dispositif de commande selon l'une des revendications précédentes, caractérisé en ce que la ligne de sélection de la marche arrière est décalée vis-à-vis de celle du rapport le plus élevé de marche avant.

8. Procédé de commande d'un dispositif conforme à l'une des revendications précédentes, caractérisé en ce que pour passer la marche arrière :
- on sélectionne la ligne de passage du rapport de passage de marche avant le plus élevé,
- on repousse le levier de changement de vitesses dans la direction opposée à ce rapport et,
- on rejoint la ligne de passage de la marche arrière sur une ligne de sélection décalée par rapport à celle des rapports de marche avant.

9. Procédé de commande selon la revendication 8, caractérisé en ce que lors du dégagement de la marche arrière, le doigt de sélection de marche avant (7) est rappelé en direction du point mort sans déplacer le crabot du rapport le plus élevé de marche avant (17).

10. Procédé de commande selon la revendication 8 ou 9, caractérisé en ce que lors du passage du rapport le plus élevé de marche avant, le doigt de sélection de marche arrière (7, 8) est mis en butée contre une face (8c) du crabot de marche arrière (18) sans déplacer celui-ci.
